# FASCICULE DE BREVET EUROPEEN

(11) **EP 1 780 121 B1**
(45) Date de publication et mention de la délivrance du brevet: **14.01.2009**
(21) Numéro de dépôt: 06021788.2
(22) Date de dépôt: 18.10.2006
(51) Int. Cl.: B64C 27/615

(54) **Pale de giravion munie d'un volet orientable et d'une languette de fixation**
Rotorblatt versehen mit einer schwenbaren Klappe und mit einer Befestigungslasche
Rotor blade provided with a swivelling flap and a fastening tongue

(30) Priorité: 26.10.2005 FR 0510917
(43) Date de publication de la demande: 02.05.2007
(73) Titulaire: EUROCOPTER, 13725 Marignane Cédex (FR)
(72) Inventeur: Lorin de la Grandmaison, François, 56700 Hennebont (FR); Morant, Michel, 13320 Bouc Bel Air (FR); Gaffiero, Jacques, 75017 Paris (FR)
(74) Mandataire: Pouillot, Laurent Pierre Paul

(56) Documents cités:
- FR-A- 2 770 826
- US-A- 2 776 718
- US-A1- 2002 021 964
- US-B1- 6 454 207

## Description

La présente invention concerne une pale active de giravion munie à son bord de fuite d'une languette de fixation et d'un volet orientable commandé localement par un dispositif électromécanique.

En effet, pour améliorer les performances aéroaccoustiques, vibratoires et aérodynamiques des pales d'un rotor principal d'avancement et de sustentation de giravion, il est avantageux de disposer un volet orientable au niveau du bord de fuite de chaque pale, dénommé par commodité volet de bord de fuite.

L'angle de braquage du volet par rapport à la pale est de l'ordre de plus ou moins 10 degrés à une fréquence de l'ordre de 30Hz. Pour être efficace, l'angle de braquage varie de façon active au cours du temps en fonction de nombreux paramètres tels que la position de la pale autour de l'axe du rotor principal, position dite « azimut », la vitesse de rotation du rotor principal et les mouvements de la pale en pas, en battement et en traînée.

Compte tenu des dimensions de la pale ainsi que des contraintes exercées sur le volet et la pale dues aux mouvements de battement, de traînée et de pas de cette dernière, on comprend aisément les difficultés à vaincre pour obtenir un volet fiable, léger et répondant aux attentes du constructeur et des utilisateurs.

On connaît, par le document US 2002/0021964, un premier type de pale muni d'un volet. Les parties supérieure et inférieure du bord d'attaque du volet ont une forme convexe alors que la partie centrale de ce bord d'attaque a une forme concave. Ainsi, le bord d'attaque du volet a une forme en ε.

En outre, les parties supérieure et inférieure sont chacune reliées à un actionneur alors que la partie centrale concave est disposée contre un genou solidaire de la pale. Par conséquent, en activant l'un ou l'autre des actionneurs, le volet bascule autour du genou de façon à présenter l'inclinaison souhaitée.

Toutefois, sous l'effet des contraintes exercées sur la pale et le volet lors d'un vol, notamment provoquées par des mouvements de battement, il y a un risque de glissement du volet le long du genou ce qui pourrait provoquer une usure prématurée, voire même selon le pire des scénarii un blocage du volet rendant ce dernier inutilisable et dangereux.

De plus, on se rend bien compte que la forme globale du volet et plus particulièrement du bord d'attaque de ce volet n'est pas optimisée d'un point de vue aérodynamique ce qui peut éventuellement être la cause de désagréments acoustiques ou vibratoires et de dégradations des performances aérodynamiques.

Par ailleurs, on connaît selon le document US 6 454 207, un deuxième type de pale comportant un volet au niveau de son bord de fuite.

Le volet est fixé à la pale par un axe longitudinal, c'est-à-dire disposé selon l'envergure de la pale, qui traverse le volet. Par suite, le volet est apte à tourner autour de cet axe longitudinal en étant mis en mouvement par une bielle articulée solidaire de l'intrados du volet, cette bielle étant elle-même commandée par un actionneur. La bielle se situe donc partiellement à l'extérieur de l'ensemble pale/volet ce qui nuit à l'aérodynamisme de l'ensemble De plus, on observe une discontinuité entre le volet et la pale qui peut provoquer un affaiblissement des performances aérodynamiques ainsi qu'un effet de sifflement dus à la circulation d'air entre le volet et la pale.

Ce deuxième type d'architecture, pour laquelle le volet tourne autour d'un axe, présente encore l'inconvénient d'occasionner un éventuel blocage du volet. En effet, il ne faut pas perdre de vue que les contraintes mécaniques exercées sur le volet et la pale au cours du vol sont très importantes. Il y a par conséquent un risque non négligeable d'assister à une déformation de l'axe, le volet ne pouvant de ce fait plus être braqué à l'inclinaison souhaitée.

Enfin, on connaît par le document FR 2 770 826considéré comme l'art antérieur le plus proche, un troisième type de pale équipée d'un volet. Désormais, le volet n'est pas relié à la pale par un axe longitudinal mais par deux tourillons disposés de chaque côté du volet. En outre, le volet est muni d'un bras flexible qui est positionné à l'intérieur de la pale en étant relié, via un levier, à un ensemble de deux moteurs rotatifs agissant sur des excentriques coaxiaux. A l'aide de cet ensemble de deux moteurs rotatifs, le dispositif commande l'inclinaison du bras flexible et ainsi du volet.

Néanmoins, tout comme pour le deuxième type de paie, les tourillons autour desquels le volet bascule ne semblent pas présenter totalement une robustesse suffisante pour garantir le bon fonctionnement du système pendant un temps raisonnable.

La présente invention a pour objet de proposer une pale active munie d'un volet et d'une languette de fixation permettant de s'affranchir des limitations des pales mentionnées ci-dessus.

Par ailleurs, il est bon de rappeler que les pales de giravion sont extrêmement minces, c'est-à-dire que l'épaisseur relative des sections de la pale est faible, de sorte que l'épaisseur de la pale est faible et ce particulièrement au niveau de leur bord de fuite où l'épaisseur diminue. Ainsi, l'épaisseur maximale du volet est de l'ordre de 20 millimètres. Il va s'en dire que dans un tel cas le dispositif autorisant l'inclinaison du volet par rapport à la pale doit être compact pour pouvoir être logé dans la pale et/ou le volet.

De plus, comme nous l'avons vu précédemment, il est important que l'ensemble soit robuste pour éviter une usure prématurée voire même un blocage du volet qui pourrait s'avérer catastrophique.

Enfin, pour réduire les efforts inertiels exercés sur la pale et le volet, il est impératif que la masse de l'ensemble reste la plus faible possible.

Selon l'invention, une pale de rotor de giravion comporte au moins un volet orientable de bord de fuite, ce volet étant apte à effectuer un pivotement autour d'un axe charnière virtuel orienté sensiblement selon l'envergure de ladite pale et dudit volet La pale est remarquable en ce que le volet est muni d'au moins deux rotules de fixation pourvues chacune d'une cage interne ainsi que d'une cage externe et d'un premier arbre qui est de plus solidaire dudit volet, le premier arbre des rotules de fixation étant sensiblement perpendiculaire à l'axe charnière virtuel de rotation du volet. De plus, à son bord de fuite la pale est munie d'une languette de fixation pourvue de points de rotulage, les cages externes des rotules de fixation étant alors solidarisées auxdits points de rotulage.

Les rotules de fixations constituent alors des pivots autour desquels le volet est à même de pivoter afin de présenter l'inclinaison souhaitée par rapport à la pale.

Cette configuration est très originale puisque le premier arbre de chaque rotule de fixation n'est pas confondu avec l'axe charnière virtuel de rotation du volet ou du moins dirigé selon ce dernier. Au contraire, ce premier arbre est avantageusement perpendiculaire à l'axe charnière virtuel et sensiblement perpendiculaire au plan des cordes du volet, c'est-à-dire approximativement dirigé selon l'épaisseur du volet. Cela revêt une grande importance dans la mesure où il devient possible d'agencer une rotule dans un espace qui est pourtant très exigu.

L'utilisation d'une telle rotule de fixation permet de répondre parfaitement au problème, la robustesse de ces équipements mécaniques n'étant plus à démontrer. De plus, il n'est plus nécessaire de pourvoir le volet d'un axe longitudinal ou de tourillons afin de le faire pivoter ce qui limite les risques de blocage de ce volet.

Avantageusement, la pale ayant un extrados et un intrados, ces extrados et intrados se rejoignent au niveau du bord de fuite de la pale afin de former la languette de manière à notamment obtenir une languette rigide. La rigidité de la languette permet d'éviter une forte perte d'efficacité du volet en empêchant un moment de rappel qui serait induit par une languette flexible.

De même, la pale comportant une nervure à proximité de son bord de fuite, la languette se situe sensiblement à mi-hauteur de la nervure.

Dans ces conditions, la tenue mécanique du bord de fuite de la pale est importante ce qui n'est pas négligeable.

En outre, le volet comporte une ouverture munie d'une lèvre inférieure et d'une lèvre supérieure, ladite languette étant agencée entre ces lèvres supérieure et inférieure lorsque ledit volet est fixé à ladite pale. Les lèvres inférieure et supérieure décrivent alors un champ angulaire de l'ordre de 20° pour permettre au volet de présenter les inclinaisons requises par rapport à la pale.

Cette inclinaison du volet par rapport à la pale est contrôlée à l'aide d'au moins un bras de commande, solidaire du volet, qui est commandé par un actionneur, linéaire ou rotatif, agencé dans la pale Par suite, une inclinaison du bras, réalisée via l'actionneur, induit directement une inclinaison de même nature du volet qui pivote autour des points de rotulage de la languette de part la présence des rotules de fixation.

Par ailleurs, la languette revêt une grande importance pour des raisons aérodynamiques et acoustiques. Elle permet en effet de supprimer une discontinuité entre le volet et la pale évitant ainsi la circulation d'air entre ces derniers. Cet avantage est maximisé lorsque la languette s'étend le long de l'envergure du volet, c'est-à-dire lorsque la languette a au moins la même longueur que le volet. Toutefois, compte tenu de la présence d'au moins un bras de commande, la languette comporte au moins deux portions distinctes séparées l'une de l'autre par un bras de commande.

Enfin, pour optimiser les performances aérodynamiques et aéroaccoustiques, la languette comporte un ruban souple, en élastomère par exemple, à son extrémité libre, c'est-à-dire à l'extrémité de la languette située du côté du bord de fuite du volet et non pas du côté du bord de fuite de la pale.

L'invention et ses avantages apparaîtront avec plus de détails dans le cadre de la description suivante, qui illustre des exemples de réalisation préférés, donnés, sans aucun caractère limitatif, en référence aux figures annexées qui représentent :
- la figure 1, une coupe schématique d'une pale équipée d'un volet,
- la figure 2, une coupe de la figure 1, montrant une zone du volet pourvue d'une rotule de fixation,
- la figure 3, une coupe de la figure 1, montrant une zone du volet pourvue d'un bras de commande, et
- la figure 4, une coupe de la figure 1, montrant une zone du volet ne comportant ni une rotule de fixation ni un bras de commande.

Les éléments présents dans plusieurs figures distinctes sont affectés d'une seule et même référence.

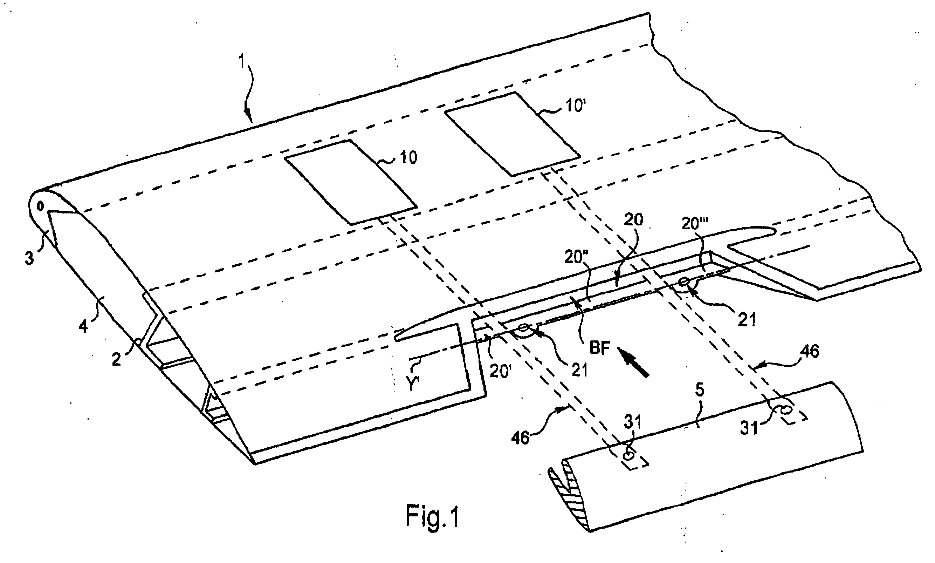

La figure 1 présente une vue schématique d'une pale équipée d'un volet conformément à l'invention.

Une pale 1 de giravion est munie d'un volet 5 de bord de fuite. De plus, deux actionneurs électromécaniques 10, 10' sont agencés à l'intérieur du caisson 4 de la pale 1 qui est disposé entre le longeron 3 et la nervure 2 de la pale 1.

Les actionneurs 10, 10' permettent au volet 5 de bord de fuite de pivoter autour de l'axe charnière virtuel Y', chacun via un bras de commande 46 solidaire du volet, afin d'améliorer les performances aéroaccoustiques, aérodynamiques et vibratoires de la pale 1. Ils sont eux-mêmes commandés par un boîtier électronique, non représenté sur les figures, qui fournit la loi de pilotage du volet (angle de braquage/fréquence) en fonction de la configuration de vol du giravion. Les actionneurs 10, 10' sont de plus alimentés électriquement par un collecteur disposé au niveau du rotor du giravion via un circuit électrique intégré à la pale 1 le long de son envergure.

En mode actif, des capteurs de position envoient des signaux au boîtier électronique pour que ce dernier puisse asservir le volet. Pour certaines configurations de vol, le système sera en mode passif, le volet 5 restant alors immobilisé en position neutre dans le prolongement du profil de base de la pale 1.

Selon la nécessité, un ou plusieurs volets sont agencés sur la pale 1, de préférence au voisinage du saumon de celle-ci, c'est-à-dire vers l'extrémité libre de la pale. De même, suivant le besoin, un nombre différent d'actionneurs pourra être prévu.

Le volet 5 est fixé à la pale 1 par l'intermédiaire de deux rotules de fixation, non représentés sur la figure 1, et d'une languette 20 agencé au bord de fuite BF de la pale 1. Les rotules de fixation sont munies chacune d'une cage interne ainsi que d'une cage externe et d'un premier arbre 31, les cages externes étant solidarisées à des points de rotulage 21 de la languette.

Par ailleurs, afin d'empêcher le passage d'air entre le volet 5 et la pale 1, la languette 20 s'étend selon l'envergure du volet 5.

Néanmoins, afin d'autoriser le passage des bras de commande 46, la languette comporte plusieurs portions 20', 20", 20''', deux portions adjacentes 20'-20", 20"-20''' étant séparées par un bras de commande 46. De ce fait, il n'y a pas de discontinuité puisque le passage de l'air entre le volet 5 et la pale 1 est empêché soit par une portion de languette soit par un bras de commande.

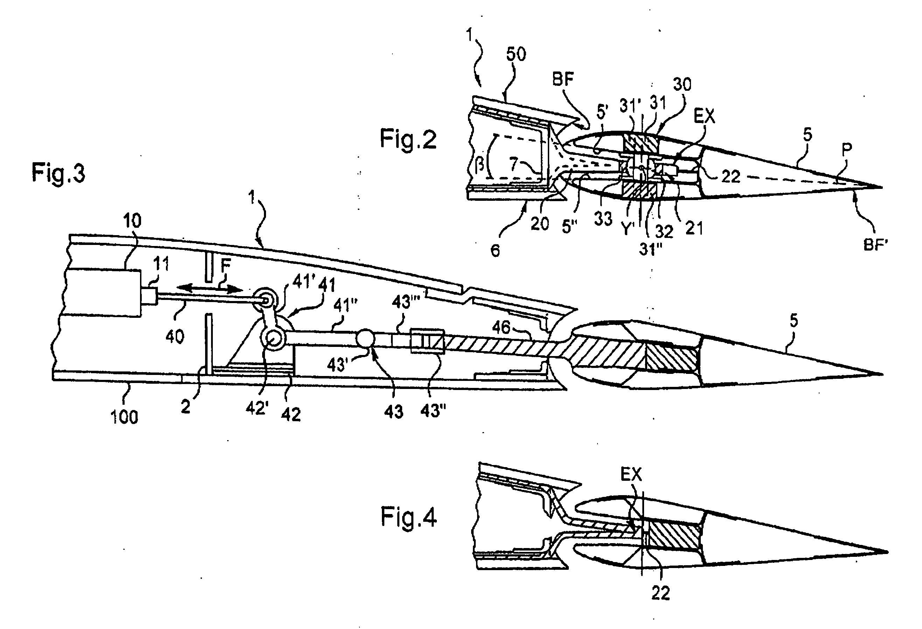

La figure 2 présente une coupe de la figure 1, montrant une zone du volet 50 pourvue d'une rotule de fixation.

Les extrados 50 et intrados 6 de la pale 1 se rejoignent au niveau du bord de fuite BF de manière à former la languette 20. On notera que le bord de fuite BF présente au volet 5 une face concave ce qui améliore l'aérodynamisme de l'ensemble.

En outre, afin de notamment faciliter l'inclinaison du volet 5, la languette 20 se situe à mi-hauteur de la nervure 7 située au niveau du bord de fuite BF de la pale 1.

De même, le volet 5 étant pourvu d'une ouverture munie d'une lèvre supérieure 5' et d'une lèvre inférieure 5", la languette est agencée entre ces lèvres supérieure 5' et inférieure 5". Dans ces conditions, les lèvres supérieure 5' et inférieure 5" décrivent un champ angulaire β de l'ordre de 20° afin d'autoriser au volet 5 les inclinaisons requises.

Par ailleurs, le volet 5 comporte une rotule de fixation 30 munie d'une cage interne 32, d'une cage externe 33 et d'un premier arbre 31.

Ce premier arbre 31 est solidaire du volet 5, un basculement du premier arbre 31 entraînant un basculement du volet 5 et inversement. Par suite, le premier arbre 31 traverse partiellement le volet 5, ces extrémités étant fixées au volet 5 par l'intermédiaire d'écrou 31', 31" par exemple. En outre et de préférence, le premier arbre 31 est sensiblement perpendiculaire à l'axe charnière virtuel Y' et au plan des cordes P du volet 5, le premier arbre 31 s'étendant alors selon l'épaisseur du volet 5.

Dans ce contexte, le volet 5 est lié à la pale 1 par l'intermédiaire de la cage externe 33 de la rotule de fixation 30. Plus précisément, la cage externe 33, qui englobe la cage interne 32, est solidarisée au point de rotulage 21 de manière à en fait représenter un insert rofulé, la cage externe 33 étant solidaire de la languette 20.

Par ailleurs, pour limiter l'usure des rotules de fixation 30, ces dernières sont si nécessaire précontraintes pour annuler le jeu séparant leurs cages interne 32 et externe 33.

En effet, les efforts centrifuges s'appliquant sur l'ensemble volet/rotules de fixation exercent une précontrainte naturelle sur les rotules de fixation dans le sens de l'envergure de la pale. Si le niveau de cette précontrainte est suffisamment élevé, les cages interne 32 et externe 33 des rotules de fixation 30 restent toujours en contact malgré les autres efforts (dynamiques, aérodynamiques et de commande) auxquelles elles sont soumises dans le sens de la corde de la pale.

Toutefois, si le niveau de la contrainte apportée naturellement par les efforts centrifuges est insuffisant, les rotules de fixation 30 sont mécaniquement précontraintes. Par suite, la pale comporte alors un dispositif de type ressort, introduit entre le volet 5 et le bord de fuite BF de la pale 1, qui permet d'exercer un effort permanent tendant par exemple à écarter le volet 5 du bord de fuite de la pale.

Enfin, l'extrémité libre EX de la languette 20 est munie d'un ruban souple 22, en élastomère par exemple, cette extrémité libre se trouvant du côté du bord de fuite BF' du volet 5 et non pas du côté du bord de fuite BF de la pale 1.

Ce ruban est d'autant plus utile qu'il interdit la Circulation d'air entre le volet 5 et la pale 1, et ce plus précisément entre l'extrémité libre EX de la languette 20 et le volet 5. De plus, de part sa souplesse, le ruban souple 22 ne risque pas d'entraver le basculement du volet 5.

La figure 3 présente une coupe de la figure 1 montrant une zone du volet 5 pourvue du bras de commande selon un premier mode de réalisation.

Quel que soit le mode de réalisation, le bras de commande 46 est solidarisé au volet 5 en étant par exemple noyé dans ce dernier au moment de la fabrication. Une inclinaison du bras commande 46 entraînera donc une inclinaison de même nature du volet 5.

Selon le premier mode de réalisation, l'actionneur 10 est du type linéaire, son extrémité 11 étant à même de se déplacer selon l'axe X conformément aux flèches F. On notera la présence de trappes d'accès 100 sur l'intrados de la pale 1 pour permettre des opérations de maintenance sur l'actionneur 10 par exemple.

La chaîne de transmission permettant de relier l'actionneur 10 au volet 5 comporte successivement une première bielle 40, un bras coudé 41, un pivot flexible extensible 43 et le bras de commande 46.

La première bielle 40, qui traverse d'ailleurs la nervure 2, est d'une part fixée à l'extrémité 11 de l'actionneur et d'autre part au bras coudé 41 et plus particulièrement au bras primaire 41' du bras coudé 41.

Par ailleurs, le coude de ce bras coudé 41 est attaché à un support 42 à l'aide d'un arbre traversant 42', le support 42 étant solidaire de la nervure 2. Ainsi, le bras coudé 41 peut pivoter autour de l'arbre traversant 42'.

En outre, le bras secondaire 41" du bras coudé 41 est lié au bras de commande 46 via un pivot flexible 43. Un pivotement du bras coudé 41 entraînera par suite le basculement du bras de commande 46 et donc du volet 5, compte tenu des faits évoqués précédemment.

De plus, on comprend bien que la distance séparant l'arbre traversant 42' du bras de commande 46 est constante. Il en va bien sûr de même de la longueur du bras coudé 41 et du bras de commande 46. Pour autoriser le basculement, il est alors impératif que le pivot flexible autorise un allongement sensiblement selon l'axe X. C'est la raison pour laquelle on le nomme par commodité pivot flexible extensible.

Le pivot flexible extensible 43 comporte alors un pivot simple usuel 43', un manchon fileté 43'' et une tige 43"' Le pivot simple est d'une part relié au bras secondaire 41" du bras coudé 41 et d'autre part à la tige 43'''. Cette tige 43''' est emmanchée dans le manchon fileté 43", lui-même fixé sur le bras de commande 46. L'emmanchement coulissant de la, tige 43''' dans le manchon fileté autorise alors un déplacement de la tige 43''' par rapport au manchon fileté 43" selon l'axe X.

Selon un deuxième mode de réalisation non représenté par une figure, l'actionneur est du type rotatif. Un dispositif, tel que décrit précédemment par exemple, permettant un allongement selon l'axe X étant alors disposé entre le bras de commande 46 et l'actionneur rotatif.

La figure 4 présente une coupe de la figure 1 dans une zone du volet 5 ne comportant ni une rotule de fixation 30 ni un bras de commande 46.

On constate alors que l'extrémité libre EX de la languette 20 est, comme expliqué précédemment pour la zone décrite par la figure 2, munie d'un ruban souple 22.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Pale (1) de rotor de giravion comportant au moins un volet (5) orientable de bord de fuite, ledit volet (5) étant apte à effectuer un pivotement autour d'un axe charnière virtuel (Y') orienté sensiblement selon l'envergure de ladite pale (1) et dudit volet (5),
**caractérisée en ce que** ledit volet (5) comporte au moins deux rotules de fixation (30) munies chacune d'une cage interne (32) ainsi que d'une cage externe (33) et d'un premier arbre (31) solidaire dudit volet (5), ladite pale étant munie à son bord de fuite (BF) d'une languette (20) de fixation pourvue de points de rotulage (21), lesdites cages externes (33) des rotules de fixation (30) étant solidarisées auxdits points de rotulage (21).

2. Pale selon la revendication 1,
**caractérisée en ce que** ledit premier arbre (31) des rotules de fixation (30) est perpendiculaire audit axe charnière virtuel (Y') de rotation dudit volet (5).

3. Pale selon l'une quelconque des revendications précédentes,
**caractérisée en ce que**, ladite pale (1) comportant un extrados (50) et un intrados (6) , lesdits extrados (5) et intrados (6) se rejoignent au niveau du bord de fuite (BF) de ladite pale (1) afin de former ladite languette (20).

4. Pale selon l'une quelconque des revendications précédentes,
**caractérisée en ce que**, ladite pale (1) comportant une nervure (7) à proximité de son bord de fuite (BF), ladite languette (20) se situe sensiblement à mi-hauteur de ladite nervure (7).

5. Pale selon l'une quelconque des revendications précédentes,
**caractérisée en ce que** ladite languette (20) est rigide.

6. Pale selon l'une quelconque des revendications précédentes,
**caractérisée en ce que** ledit volet (5) comporte une ouverture munie d'une lèvre inférieure (5") et d'une lèvre supérieure (5'), ladite languette (20) étant agencée entre ces lèvres supérieure (5') et inférieure (5") lorsque ledit volet (5) est fixé à ladite pale (1)

7. Pale selon la revendication 6
**caractérisée en ce que** lesdites lèvres inférieure (5") et supérieure (5') décrivent un champ angulaire (p) de l'ordre de 20°.

8. Pale selon l'une quelconque des revendications précédentes,
**caractérisée en ce que** l'inclinaison dudit volet (5) par rapport à ladite pale (1) est contrôlée à l'aide d'au moins un bras de commande (46) solidaire dudit volet (5), ledit bras de commande (46) étant commandé par un actionneur (10,10') agencé dans ladite pale (1).

9. Pale selon la revendication 8,
**caractérisée en ce que**, ladite languette (20) s'étendant le long de l'envergure dudit volet (5), ladite languette (20) comporte au moins deux portions (20',20",20"') distinctes séparées par un bras de commande (46).

10. Pale selon l'une quelconque des revendications précédentes,
**caractérisée en ce que** ladite languette (20) comporte un ruban souple (22) à son extrémité libre (EX).

## Claims

1. Rotorcraft rotor blade (1) including at least one tiltable trailing-edge flap (5), said flap (5) being suitable for pivoting about a virtual hinge axis (Y') extending substantially along the span of said blade (1) and of said flap (5),
**characterised in that** said flap (5) includes at least two fastening ball joints (30), each provided with an inner cage (32) together with an outer cage (33) and a first pin (31) secured to said flap (5), said blade being provided at its trailing edge (BF) with a fastening tongue (20) provided with swivel points (21), said outer cages (33) of the fastening ball joints (30) being secured to said swivel points (21).

2. Blade according to Claim 1,
**characterised in that** said first pin (31) of the fastening ball joints (30) is perpendicular to said virtual hinge axis (Y') about which said flap (5) pivots.

3. Blade according to any one of the preceding claims,
**characterised in that** said blade (1) includes a suction face (50) and a pressure face (6), with said suction face and said pressure face meeting at the trailing edge (BF) of said blade (1) in order to form said tongue (20).

4. Blade according to any one of the preceding claims,
**characterised in that** said blade (1) includes a rib (7) in the proximity of its trailing edge (BF), with said tongue (20) being situated substantially halfway up said rib (7).

5. Blade according to any one of the preceding claims,
**characterised in that** said tongue (20) is rigid.

6. Blade according to any one of the preceding claims,
**characterised in that** said flap (5) includes an opening provided with a bottom lip (5'') and a top lip (5'), said tongue (20) being arranged between said top and bottom lips (5', 5") when said flap (5) is secured to said blade (1).

7. Blade according to Claim 6,
**characterised in that** said bottom and top lips (5", 5') define an angular field (p) of about 20°.

8. Blade according to any one of the preceding claims,
**characterised in that** the inclination of said flap (5) relative to said blade (1) is controlled with the help of at least one control arm (46) secured to said flap (5), said control arm (46) being controlled by an actuator (10, 10') arranged in said blade (1).

9. Blade according to Claim 8,
**characterised in that** said tongue (20) extends along the span of said flap (5), with said tongue (20) including at least two distinct portions (20', 20'', 20"') that are separated by a control arm (46).

10. Blade according to any one of the preceding claims,
**characterised in that** said tongue (20) includes a flexible strip (22) at its free end (EX).

## Patentansprüche

1. Rotorblatt (1) eines Drehflüglers, das mindestens eine verstellbare Hinterkantenklappe (5) aufweist, wobei die Klappe (5) fähig ist, eine Schwenkbewegung um eine virtuelle Scharnierachse (Y') auszuführen, die im Wesentlichen gemäß der Spannbreite des Blatts (1) und der Klappe (5) ausgerichtet ist,
**dadurch gekennzeichnet, dass** die Klappe (5) mindestens zwei Befestigungs-Kugelgelenke (30) aufweist, die je mit einem inneren Käfig (32) sowie mit einem äußeren Käfig (33) und mit einer fest mit der Klappe (5) verbundenen ersten Welle (31) versehen sind, wobei das Blatt an seiner Hinterkante (BF) mit einer Befestigungszunge (20) versehen ist, die mit Drehpunkten (21) ausgestattet ist, wobei die äußeren Käfige (33) der Befestigungs-Kugelgelenke (30) fest mit den Drehpunkten (21) verbunden werden.

2. Blatt nach Anspruch 1, **dadurch gekennzeichnet, dass** die erste Welle (31) der Befestigungs-Kugelgelenke (30) lotrecht zur virtuellen Drehscharnierachse (Y') der Klappe (5) liegt.

3. Blatt nach einem der vorhergehenden Ansprüche, **dadurch gekennzeichnet, dass**, wenn das Blatt (1) eine Oberseite (50) und eine Unterseite (6) aufweist, die Oberseite (50) und die Unterseite (6) sich in Höhe der Hinterkante (BF) des Blatts (1) vereinen, um die Zunge (20) zu bilden.

4. Blatt nach einem der vorhergehenden Ansprüche, **dadurch gekennzeichnet, dass**, wenn das Blatt (1) eine Rippe (7) in der Nähe seiner Hinterkante (BF) aufweist, die Zunge (20) sich im Wesentlichen auf halber Höhe der Rippe (7) befindet.

5. Blatt nach einem der vorhergehenden Ansprüche, **dadurch gekennzeichnet, dass** die Zunge (20) starr ist.

6. Blatt nach einem der vorhergehenden Ansprüche, **dadurch gekennzeichnet, dass** die Klappe (5) eine mit einer unteren Lippe (5") und mit einer oberen Lippe (5') versehene Öffnung aufweist, wobei die Zunge (20) zwischen dieser oberen Lippe (5') und unteren Lippe (5") angeordnet ist, wenn die Klappe (5) am Blatt (1) befestigt ist.

7. Blatt nach Anspruch 6, **dadurch gekennzeichnet, dass** die untere Lippe (5") und die obere Lippe (5') ein Winkelfeld (β) in der Größenordnung von 20° beschreiben.

8. Blatt nach einem der vorhergehenden Ansprüche, **dadurch gekennzeichnet, dass** die Neigung der Klappe (5) bezüglich des Blatts (1) mit Hilfe mindestens eines Steuerarms (46) gesteuert wird, der fest mit der Klappe (5) verbunden ist, wobei der Steuerarm (46) von einem Stellglied (10, 10') gesteuert wird, das in dem Blatt (1) angeordnet ist.

9. Blatt nach Anspruch 8, **dadurch gekennzeichnet, dass**, wenn die Zunge (20) sich entlang der Spannweite der Klappe (5) erstreckt, die Zunge (20) mindestens zwei unterschiedliche Abschnitte (20', 20", 20'") aufweist, die von einem Steuerarm (46) getrennt werden.

10. Blatt nach einem der vorhergehenden Ansprüche, **dadurch gekennzeichnet, dass** die Zunge (20) an ihrem freien Ende (EX) einen biegsamen Streifen (22) aufweist.
